# EUROPEAN PATENT APPLICATION

(11) **EP 4 484 281 A1**
(43) Date of publication of application: **01.01.2025**
(21) Application number: 23182705.6
(22) Date of filing: 30.06.2023
(51) Int. Cl.: B64C 9/02, B64C 9/18

(54) **TRAILING EDGE SYSTEM FOR AN AIRCRAFT AND METHOD FOR OPERATING A TRAILING EDGE MOVABLE OF A TRAILING EDGE SYSTEM**

(71) Applicant: Airbus Operations GmbH, 21129 Hamburg (DE)
(72) Inventor: Lorenz, Florian, 21129 Hamburg (DE); Andreani, Luc, 21129 Hamburg (DE); Held, Tobias, 21129 Hamburg (DE)

(57) **Abstract**

The invention relates to a trailing edge system (10) for an aircraft (100). The system (10) comprises a wing structure (12), a trailing edge movable (20) movably coupled to the wing structure (12), and a flexible panel element (30) connected to the wing structure (12) in order to seal a gap (21) between an outer surface (16) of the wing structure (12) and the trailing edge movable (20). An adjustment element (26) is arranged on the trailing edge movable (20) and is arranged relative to the flexible panel element (30) such that the flexible panel element (30) comes into contact with the adjustment element (26) when the trailing edge movable (20) is moved towards the flexible panel element (30). The adjustment element (26) adjusts a movement of the flexible panel element (30) such that the flexible panel element (30) moves along a first surface region (25) of the trailing edge movable (20).

## Description

### Field of the invention

The invention generally relates to movable flap systems. In particular, the invention relates to a trailing edge system for an aircraft and a method for operating a trailing edge movable of a trailing edge system.

### Technical Background

Movables like flap components for aircraft are usually exposed to strong aerodynamic loads during operation of the aircraft. For example, flap components are attached at a trailing edge region of an aircraft wing and provide specified cruise and high-lift configurations, wherein the flap components are adapted to be retracted and deployed depending on the current flight condition. Modern high-lift trailing edge systems use flap components which rotate and perform a fowler motion to set up the specified high-lift wing configurations. One important aerodynamic parameter is the gap between the flap surface and the wing surface, i.e., the so-called shroud line, since this gap considerably affects the airflow in the trailing edge regions. In order to design the gap for the different settings, either the movement of the flap component in relation to the shroud can be tailored or the shroud can be mechanically adapted.

US 2012/0012696 A1 describes an aircraft flap actuator assembly which includes at least one fixed support, at least one track having a curvilinear track surface connected to the fixed support, at least one flap support adapted to traverse the curvilinear track surface, a trailing edge flap connected to the at least one flap support and a flap actuator engaging the at least one flap support.

US 6,076,775 A describes a lifting airfoil such as an aircraft wing with a landing flap that forms at least a portion of a trailing edge of the airfoil and that is movably connected to the main body of the airfoil, wherein the landing flap has a flap leading edge nose and a flap trailing edge body and is bounded by a pressure-side cover skin and a vacuum-side cover skin.

### Summary of the invention

It may be seen as an object of the invention to facilitate the operation of a trailing edge system while improving the aerodynamic characteristics of the trailing edge system.

A system and a method according to the features of the independent claims are provided. Further embodiments of the invention are evident from the dependent claims and from the following description.

According to an aspect of the invention, a trailing edge system for an aircraft is provided. The trailing edge system comprises a wing structure having a skin section with an aerodynamic outer surface. The trailing edge system further comprises a trailing edge movable which is movably coupled to the wing structure and which is movable relative to the wing structure between a retracted position and an extended position. The trailing edge system further comprises a flexible panel element, herein also referred to as first flexible panel element, which is connected to the skin section of the wing structure and which is configured to at least partially seal or cover a gap between the outer surface of the wing structure and the trailing edge movable. A first adjustment element is arranged at the trailing edge movable, for example on an outer surface thereof. The first adjustment element is arranged relative to the flexible panel element such that a first end of the flexible panel element comes into contact with the first adjustment element when the trailing edge movable is moved towards the flexible panel element. The first adjustment element is configured to adjust a movement of the flexible panel element such that the first end of the flexible panel element moves, e.g., slides, along a first surface region, e.g., a lower surface region, of the trailing edge movable.

The inventive trailing edge system may be seen as an approach or concept to provide an improved sealing element in the form of the flexible panel element in order to more efficiently seal the gap between the outer surface of the wing structure and a flap component coupled to the wing structure, while particularly optimizing the specific movement of the sealing element. This may reduce or avoid detrimental interactions between the sealing element and the trailing edge movable during movement of the flap component towards the sealing element.

For example, a flexibility or pre-tension of the flexible panel element allows the flexible panel element to adapt to different configurations, e.g., different positions and/or orientations, of the flap component with respect to the wing structure, while reliably sealing or covering the gap between the outer surface of the wing structure and the flap component, at least during a partial movement of the flap component.

This improved sealing or covering of the gap between the outer surface of the wing structure and the flap component may positively influence an air flow in the trailing edge region of an aircraft wing, in particular, in the transition region between the aerodynamic outer surface of the wing skin and the aerodynamic outer surface of the flap skin, thereby reducing the drag and further improving aerodynamic high-lift characteristics of the trailing edge system.

The trailing edge system comprises the wing structure which may be seen as the base system to which the trailing edge movable is movably coupled. The wing structure has a skin section with an aerodynamic outer surface. In particular, the wing structure has an aerodynamic upper surface and an aerodynamic lower surface. The upper and lower surfaces may be connected to each other via a leading edge at the front of the wing structure and via a trailing edge at the rear of the wing structure. The at least one trailing edge movable may be a flap component, e.g., a flap or part of a flap, and may be arranged at the rear of the wing structure. Multiple trailing edge movables may together form a trailing edge unit. For example, multiple trailing edge movables are arranged next to each other along a spanwise extension direction of the wing structure. However, multiple trailing edge movables may also be arranged next to each other along a chordwise extension direction of the wing structure, wherein the trailing edge movables provide a series of trailing edge movables coupled to each other.

The trailing edge movable is configured to move relative to the wing structure between the retracted position and the extended position, wherein the gap between the wing structure and the trailing edge movable changes the geometrical appearance during the movement. In particular, the gap size increases when the trailing edge movable is moved from the retracted position to the extended position and decreases when the trailing edge movable is moved from the extended position to the retracted position. The retracted position may herein also be referred to as retracted configuration and the extended position may herein also be referred to as extended configuration.

The flexible panel element may be arranged at the skin section, in particular at the aerodynamic outer surface, of the wing structure and may extend in a downstream direction of the wing structure to span or cover at least a part of the gap between the wing structure and the trailing edge movable. For example, the flexible panel element can be attached to a lower surface of the skin section of the wing structure.

The flexible panel element may comprise a predetermined flexibility and/or pre-tension after manufacturing the same. It may comprise a fiber-reinforced material, for example a fiber-reinforced plastic material like carbon fiber-reinforced plastics. However, it may also comprise a metallic material or combinations of fiber-reinforced materials and metallic materials. The flexible panel element may be manufactured using a molding process in which it is pre-formed or pre-shaped. The flexible panel element may have a sheet-like or plate-like shape.

The first adjustment element may be present in the form of a protrusion or extension on the surface of the trailing edge movable. In its cross-section, the trailing edge movable may have an airfoil-like shape defined by an outer surface contour, and the first adjustment element may form an additional structure that protrudes away from the outer surface contour of the trailing edge movable. The first adjustment element may be present in the form of an extension or protrusion in a nose region of the trailing edge movable such that the airfoil contour of the trailing edge movable in said nose region follows a more tapered contour when compared to an airfoil contour without the first adjustment element. In other words, the first adjustment element may add a substantially triangular structure to the nose region of the trailing edge movable, thereby providing a sharper or more acute angle which facilitates the movement and/or deflection of the flexible panel element when coming into contact with the first adjustment element.

Due to the flexibility and/or pre-tension of the flexible panel element, it may be configured to be bent or deflected when it comes into contact with and is pushed against the first adjustment element of the trailing edge movable, during movement of the trailing edge movable with respect to the wing structure. It is possible that the flexible panel element is in contact with the outer surface of the trailing edge movable when the trailing edge movable is in the most retracted position and remains in contact with the outer surface of the trailing edge movable and subsequently the first adjustment element during movement of the trailing edge movable up to an intermediate position where the first flexible panel element loses contact to and is separated from the outer surface of the first adjustment element, i.e., where the contact between the flexible panel element and the outer surface of the first adjustment element ends. Consequently, between the intermediate position and the extended position, there may be no contact between the first flexible panel element and the outer surface of the trailing edge movable or first adjustment element. That is, there may be a contact phase where the gap between the aerodynamic outer surface of the wing structure and the outer surface of the trailing edge movable is covered, e.g., sealed, by the first flexible panel element, and a noncontact phase where there is a gap between the first flexible panel element and the outer surface of the trailing edge movable.

According to an embodiment, the trailing edge movable has a cross-sectional shape in the form of an airfoil that is defined by a surrounding airfoil surface contour.

The airfoil itself may define the surface contour of the trailing edge movable, for example of a flap component, in its cross section. That is, the airfoil of the trailing edge movable may be delimited by the surrounding airfoil surface contour. The airfoil surface contour may represent a surface contour where air flows along when the trailing edge system is in operation. It is noted that airfoil of the trailing edge may be seen as a regular airfoil contour.

According to an embodiment, the first adjustment element is connected to the surrounding airfoil surface contour of the trailing edge movable.

In particular, a portion of the above-mentioned surrounding airfoil surface contour may be covered by the first adjustment element. In particular, the first adjustment element may be attached to or formed on the outer surface of the trailing edge movable and may protrude away from the outer surface of the trailing edge movable. The first adjustment element may be attached to the outer surface of the trailing edge movable via any attachment mechanism, for example a riveted attachment, a screwed attachment, a bolted attachment, etc. The first adjustment element may also be attached to the trailing edge movable using an adhesive bond or a weld connection.

It is noted that the airfoil of the trailing edge movable together with the additional first adjustment element may introduce an irregularity on the airfoil contour, since it adds further structure, in particular at a nose region, to the airfoil contour of the trailing edge movable.

According to an embodiment, the first adjustment element has a substantially triangular cross-sectional shape.

In this manner, the additional structure represented by the first adjustment element which is attached to the airfoil cross-section of the trailing edge movable provides an additional tapering at the nose region or leading edge region of the trailing edge movable. This additional tapering provides the nose region or leading edge region of the trailing edge movable with a more acute tip region as will be explained in more detail with reference to the drawings.

According to an embodiment, the first adjustment element is arranged at a leading edge surface region of the trailing edge movable.

Thus, when the trailing edge movable is moved towards the flexible panel element during retraction of the trailing edge movable from the extended to the retracted configuration, the first adjustment element may first come into contact with the flexible panel element, thereby setting or adapting the direction into which the flexible panel element is deflected with respect to the trailing edge movable before it is moved along the outer surface of the trailing edge movable.

According to an embodiment, the first adjustment element comprises a sheet-like or plate-like structure that is attached to the outer surface of trailing edge movable and protrudes away from the outer surface of trailing edge movable.

The sheet-like or plate-like structure may be connected to the outer surface of the trailing edge movable and also may protrude away from the outer surface of the trailing edge movable. The sheet-like or plate-like structure may have lateral dimensions, i.e., a width and a length, being substantially greater than a thickness of the sheet-like or plate-like structure. The sheet-like or plate-like structure may thus be considered as a fence on the outer surface of the trailing edge movable. A lateral dimension of the sheet-like or plate-like structure may extend in a chordwise direction of the trailing edge movable to reduce drag, since the thickness of the sheet-like or plate-like structure is very small and thus the surface portion of the first adjustment element that is subjected to an oncoming airflow is very small.

In an example, the sheet-like or plate-like structure is attached to the outer surface of trailing edge movable and is arranged substantially perpendicular with respect to the outer surface of trailing edge movable.

According to an embodiment, the first adjustment element is arranged relative to the flexible panel element such that the first end of the flexible panel element comes into contact with the first adjustment element when the trailing edge movable is moved from the extended position to the retracted position.

In particular, when the trailing edge movable is retracted, the gap between the trailing edge movable including the first adjustment element and the flexible panel element will become smaller until the first end of the flexible panel element abuts the first adjustment element, where a specified deflection of the flexible panel element is initiated. After the first end of the flexible panel element came into contact with the first adjustment element and the deflection was initiated, and when the trailing edge is further retracted, then the first end of the flexible panel element will slide along the outer surface of the trailing edge movable. This will be explained in more detail in the description of the drawings below.

According to an embodiment, the trailing edge system further comprises a second adjustment element which is arranged on the trailing edge movable, wherein the second adjustment element is spaced apart from the first adjustment element in a spanwise direction of the trailing edge movable.

It is possible that the features and characteristics of the first adjustment element equally apply for the second adjustment element. In an example, a plurality of adjustment element may be arranged on the trailing edge movable, wherein all of these adjustment elements are spaced apart from each other in the spanwise direction of the trailing edge movable.

According to an aspect, an aircraft wing comprising the trailing edge system as described herein is provided, wherein the trailing edge system is arranged at a trailing edge region of the aircraft wing.

In an example, an aircraft comprising the trailing edge system as described herein is provided.

According to an aspect, a method for operating a trailing edge movable of a trailing edge system is provided. The trailing edge system comprises a wing structure to which the trailing edge movable is movably coupled, wherein the wing structure has a flexible panel element that is configured to at least partially seal a gap between an outer surface of the wing structure and the trailing edge movable, and wherein the trailing edge movable has a first adjustment element being arranged on a surface of the trailing edge movable. In a step of the method, the trailing edge movable is moved towards the flexible panel element. In another step, a contact is established between the first adjustment element and the flexible panel element. In another step, a movement of the flexible panel element is adjusted by the first adjustment element, such that a first end of the flexible panel element moves along a first surface region of the trailing edge movable. The method step may be performed in the indicated order.

### Brief description of the drawings

The present invention will hereinafter be described in conjunction with the following drawing figures, wherein like numerals denote like elements, and wherein:
- Fig. 1: shows a cross-sectional view of a trailing edge system including first and second flexible panel elements for sealing gaps between a wing structure and a trailing edge movable.
- Fig. 2: shows a cross-sectional view of a trailing edge system with different deflection states of the first and second flexible panel elements of Fig. 1.
- Fig. 3: shows a cross-sectional view of the trailing edge system of Fig. 1, with the trailing edge movable coming into contact with the first flexible panel element.
- Fig. 4: shows a cross-sectional view of the trailing edge system of Fig. 1, with the trailing edge movable further including a first adjustment element being spatially separated from the first flexible panel element.
- Fig. 5: shows a cross-sectional view of the trailing edge system of Fig. 4, with the trailing edge movable including the first adjustment element still being spatially separated from the first flexible panel element.
- Fig. 6: shows a cross-sectional view of the trailing edge system of Fig. 4, with the trailing edge movable including the first adjustment element coming into contact with the first flexible panel element.
- Fig. 7: shows a cross-sectional view of the trailing edge system of Fig. 4, with the first flexible panel element moving along a surface of the trailing edge movable.
- Fig. 8: shows a cross-sectional view of the trailing edge system of Fig. 4, with the first flexible panel element further moving along a surface of the trailing edge movable.
- Fig. 9: shows an aircraft comprising a trailing edge system.
- Fig. 10: shows a flow diagram of a method for operating a trailing edge system.

### Detailed description of exemplary embodiments

The representations and illustrations in the drawings are schematic and not to scale. A better understanding of the method and system described above may be obtained through a review of the illustrations accompanying this application together with a review of the detailed description that follows.

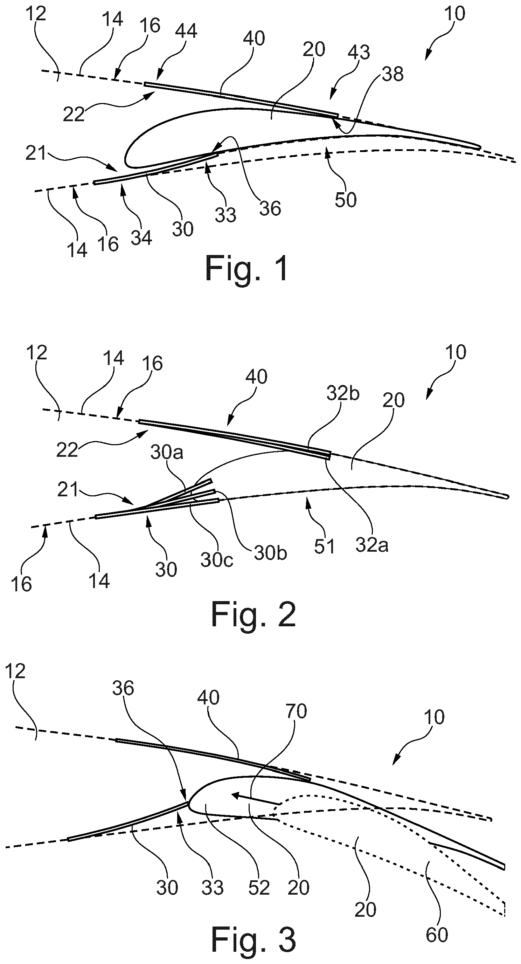

Fig. 1 shows a trailing edge system 10 including first and second flexible panel elements 30, 40 for sealing gaps 21, 22 between a wing structure 12 and a trailing edge movable 20. An outer contour of the trailing edge system 10 is indicated by a dashed line in Fig. 1. The trailing edge movable 20 is movably coupled to the wing structure 12 and is thus movable relative to the wing structure 12. For simplicity, Fig. 1 does not show the coupling mechanism which movably couples the trailing edge movable 20 to the wing structure 12. In Fig. 1, the trailing edge movable 20 is positioned in a retracted position 50.

The trailing edge system 10 further comprises a first or lower flexible panel element 30 which is arranged to seal or cover a lower gap 21 between a lower surface 16 of the wing structure 12 and the trailing edge movable 20. The first flexible panel element 30 interacts with the trailing edge movable 20 by establishing a contact 36 between a first end 33 of the first flexible panel element 30 and a lower surface of the trailing edge movable 20. Furthermore, the first flexible panel element 30 is attached to or integrally formed with the lower skin section 14 of the wing structure 12 via a second end 34. When the trailing edge movable 20 is in the retracted position 50 as shown in Fig. 1, the first flexible panel element 30 is deflected away from a neutral position due to the contact 36 between the first end 33 of the first flexible panel element 30 and the lower surface of the trailing edge movable 20. That is, the first flexible panel element 30 is in a loaded state where the first end 33 of the first flexible panel element 30 is pressed against the lower surface of the trailing edge movable 20 due to a pre-tension of the first flexible panel element 30. In other words, when the trailing edge movable 20 is in the retracted position 50 as shown in Fig. 1, the first end 33 of the first flexible panel element 30 is biased against the lower surface of the trailing edge movable 20, i.e., is pushed upwards in Fig. 1, and thus closes the lower gap 21 between the lower surface 16 of the wing structure 12 and the lower surface of the trailing edge movable 20. This provides an improved air flow along the lower surface of the entire trailing edge system 10. In particular, the airflow may be positively influenced and/or drag may be reduced by closing the lower gap 21 in this manner.

The trailing edge system 10 further comprises a second or upper flexible panel element 40 which is arranged to seal or cover an upper gap 22 between the upper surface 16 of the wing structure 12 and the trailing edge movable 20. The second flexible panel element 40 interacts with the trailing edge movable 20 by establishing a contact 38 between a first end 43 of the second flexible panel element 40 and an upper surface of the trailing edge movable 20. Furthermore, the second flexible panel element 40 is attached to or integrally formed with the upper skin section 14 of the wing structure 12, for example via a second end 44 of the second flexible panel element 40. When the trailing edge movable 20 is in the retracted position 50 as shown in Fig. 1, the second flexible panel element 30 is slightly deflected away from a neutral position due to the contact 38 between the first end 43 of the second flexible panel element 40 and the upper surface of the trailing edge movable 20. That is, the second flexible panel element 40 is in a loaded state where the first end 43 of the second flexible panel element 40 is pressed against the upper surface of the trailing edge movable 20 due to a pre-tension of the second flexible panel element 40. In other words, when the trailing edge movable 20 is in the retracted position 50 as shown in Fig. 1, the first end 43 of the second flexible panel element 40 is biased against the upper surface of the trailing edge movable 20, i.e., is pushed downwards in Fig. 1, and thus closes the upper gap 22 between the upper surface 16 of the wing structure 12 and the upper surface of the trailing edge movable 20. This provides an improved air flow along the upper surface of the entire trailing edge system 10. In particular, the airflow may be positively influenced and/or drag may be reduced by closing the upper gap 22 in this manner.

During a movement of the trailing edge movable 20 relative to the wing structure 12, in particular during a movement of the trailing edge movable 20 from the retracted configuration 50 to a more extended configuration, like the intermediate or clean configuration 51 as shown in Fig. 2, the first end 33 of the first flexible panel element 30 remains in contact with the lower surface of the trailing edge movable 20. However, the structural loading within the first flexible panel element 30 increases as it is bent to a more deflected state. In particular, the pre-tension of the first flexible panel element 30 is higher in the intermediate or clean configuration 51 as shown in Fig. 2 when compared to the retracted configuration 50 as shown in Fig. 1.

For a better understanding, Fig. 2 shows three different deflection states of the first flexible panel element 30 which will be explained in the following. The first flexible panel element 30 is configured to be deflected from a neutral position 30a to a first deflected position 30b and to a second deflected position 30c, the second deflected position 30c having a stronger deflection or higher than the first deflected position 30b. The neutral position 30a is representative for an unloaded state of the first flexible panel element 30 which the first flexible panel element 30 adopts when the first end 33 of the first flexible panel element 30 is spatially separated from the surface of the trailing edge movable 20, i.e., when the first end 33 of the flexible panel element 30 is not in contact with the surface of the trailing edge movable 20. The deflected positions 30b, 30c are representative for a loaded state of the first flexible panel element 30 which the first flexible panel element 30 adopts when the first end 33 of the first flexible panel element 30 is in contact with the surface of the trailing edge movable 20.

In the present case, when the trailing edge movable 20 is in the retracted configuration 50 as shown in Fig. 1, the first flexible panel element 30 adopts the first deflected position 30b (cf. Fig. 2). When the trailing edge movable 20 is moved, i.e., extended, to the intermediate or clean configuration 51 as shown in Fig. 2, the deflection of the first flexible panel element 30 increases and the first flexible panel element 30 adopts the second deflected position 30c. This also leads to an increasing pre-tension within the first flexible panel element 30 and, thus, to an increasing contact pressure between the first end 33 of the first flexible panel element 30 and the lower surface of the trailing edge movable 20. Fig. 1 also indicates the lower contour of the trailing edge system 10 as it would appear when the trailing edge movable 20 is in the intermediate or clean configuration 51 (cf. Fig. 2). It can be derived that the first flexible panel element 30 is pushed downwardly from the first deflected state 30b to the second deflected state 30c. This pushing occurs as a result of the contact between the first end 33 of the first flexible panel element 30 and the lower surface of the trailing edge movable 20 together with the movement of the trailing edge movable 20 from the retracted configuration 50 to the intermediate or clean configuration 51.

During a movement of the trailing edge movable 20 relative to the wing structure 12, in particular during a movement of the trailing edge movable 20 from the retracted configuration 50 to the intermediate or clean configuration 51 as shown in Fig. 2, the first end 43 of the second flexible panel element 40 also remains in contact with the upper surface of the trailing edge movable 20. Also in this case, the structural loading within the second flexible panel element 40 increases as it is bent to a more deflected state. In particular, the pre-tension of the second flexible panel element 40 is higher in the intermediate or clean configuration 51 as shown in Fig. 2 when compared to the retracted configuration 50 as shown in Fig. 1.

For a better understanding, Fig. 2 shows two different deflection states of the second flexible panel element 40 which will be explained in the following. The second flexible panel element 40 is configured to be deflected from a first deflected position 32a to a second deflected position 32b, the second deflected position 32b having a stronger or higher deflection than the first deflected position 32a. The deflected positions 32a, 32b are representative for a loaded state of the second flexible panel element 40 which the second flexible panel element 40 adopts when the first end 43 of the second flexible panel element 40 is in contact with the surface of the trailing edge movable 20.

In the present case, when trailing edge movable 20 is in the retracted configuration 50 as shown in Fig. 1, the second flexible panel element 40 adopts the first deflected position 32a (cf. Fig. 2). When the trailing edge movable 20 is moved, i.e., extended, to the intermediate or clean configuration 51 as shown in Fig. 2, the deflection of the second flexible panel element 40 increases and the second flexible panel element 40 adopts the second deflected position 32b. This also leads to an increasing pre-tension within the second flexible panel element 40 and, thus, to an increasing contact pressure between the first end 43 of the second flexible panel element 40 and the upper surface of the trailing edge movable 20. It can be derived that the second flexible panel element 40 is pushed upwardly from the first deflected state 32a to the second deflected state 32b. This pushing occurs as a result of the contact between the first end 43 of the second flexible panel element 40 and the upper surface of the trailing edge movable 20 together with the movement of the trailing edge movable 20 from the retracted configuration 50 to the intermediate or clean configuration 51.

Fig. 3 shows the trailing edge system 10 of Fig. 1, with the trailing edge movable 20 coming into contact with the first flexible panel element 30. In particular, Fig. 1 shows a retracting movement of the trailing edge movable 20, with a moving direction 70 indicated by an arrow. This retracting movement shifts the trailing edge movable 20 from an extended position 60 to an intermediate position 52, wherein the intermediate position 52 may represent any position of the trailing edge movable 20 between the extended position 60 and the retracted position 50 (cf. Fig. 1). During retraction of the trailing edge movable 20 along the moving direction 70, there will be a point in time when the first end 33 of the first flexible panel element 30 comes into contact 36 with the trailing edge movable 20. As can be seen in Fig. 3, the first end 33 of the first flexible panel element 30 contacts a nose region or leading edge region of the trailing edge movable 20, i.e., a nose region or leading edge region of the airfoil contour of the trailing edge movable 20. In this case, it might not be determinable whether the first flexible panel element 30 moves upwardly or downwardly when the trailing edge movable 20 is further retracted along the moving direction 70. This may be due to the fact that the airfoil contour of the trailing edge movable 20 is rounded in the nose region or leading edge region.

In other words, when flap 20 is for example driven from a high lift configuration 60 into an intermediate or clean configuration 51, there might be one specific flap position where the first flexible panel element 30 gets in contact 36 with the flap 20. Depending on how flexible the first flexible panel element 30 is and how the unloaded or relaxed state of the first flexible panel element 30 is defined, there might be a clash between the first flexible panel element 30 and the flap 20. If the first point of contact 36 between flap 20 and first flexible panel element 30 is too high in relation to the flap nose, the flap geometry might not support the downward deflection of the first flexible panel element 30.

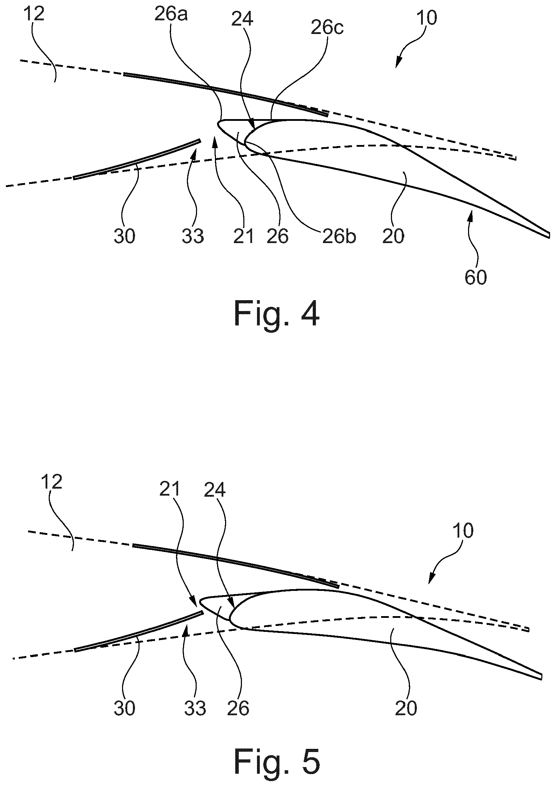

It will now be described with respect to Figs. 4 to 8 how the general movement of the first flexible element 30 can be influenced, i.e., guided, by an adjustment element 26 that is arranged at the nose region or leading edge region of the trailing edge movable 20. In particular, Figs. 4 to 8 show a sequence of the movement of the trailing edge movable 20 during the retraction procedure.

Fig. 4 shows the trailing edge system 10 of Fig. 1, with the trailing edge movable 20 further including the first adjustment element 26 being spatially separated from the first flexible panel element 30, i.e., the first adjustment element 26 has not yet come into contact with the first flexible panel element 30. For example, the trailing edge movable 20 is in an extended position 60. The adjustment element 26 may resemble a triangular structural element that is arranged, e.g., attached, to the outer surface of the nose region or leading edge region of the trailing edge movable 20. In particular, the first adjustment element 26 is arranged on a leading edge surface region 24 of the trailing edge movable 20. A first corner 26a or tip region 26a of the triangularly shaped first adjustment element 26 faces away from the surface 24 of the trailing edge movable 20. A second corner 26b and a third corner 26c may define transition points of the triangularly shaped first adjustment element 26 where the first adjustment element 26 connects to the nose region or leading edge region of the trailing edge movable 20. As indicated above, the current movement state of trailing edge movable 20 including the first adjustment element 26 is such that it has not yet come into contact with the first end 33 of the first flexible panel element 30.

Fig. 5 shows the trailing edge system 10 of Fig. 4, with the trailing edge movable 20 including the first adjustment element 26 still being spatially separated from the first flexible panel element 30. In comparison to Fig. 4, Fig. 5 now shows a state where the trailing edge movable 20 has been moved closer to the first end 33 of the first flexible panel element 30. Fig. 5 may show a point in time immediately before establishing a contact between the first end 33 of the first flexible panel element 30 and the trailing edge movable 20.

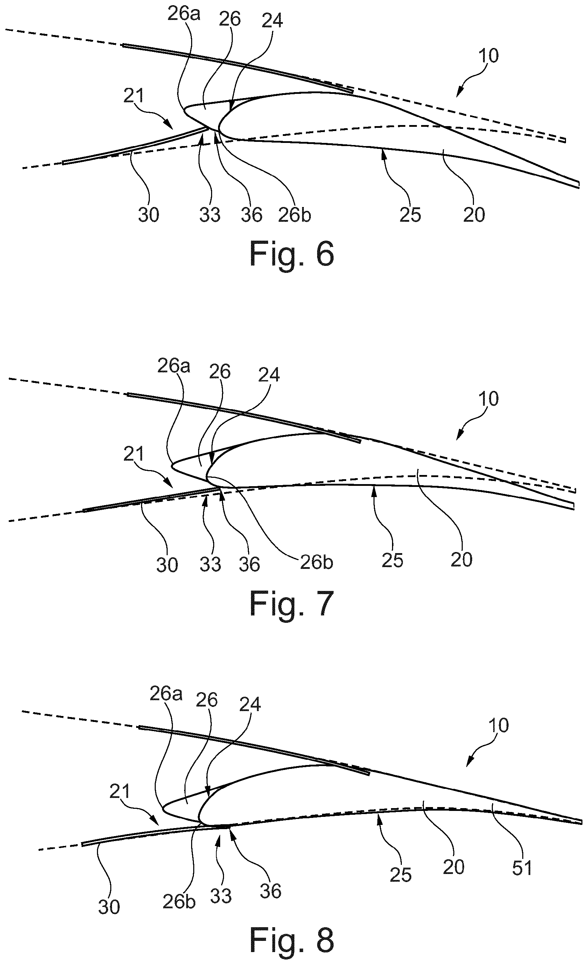

Fig. 6 shows the trailing edge system 10 of Fig. 4, with the trailing edge movable 20 including the first adjustment element 26 coming into contact with the first flexible panel element 30. In comparison to Fig. 5, Fig. 6 now shows a state where the trailing edge movable 20 has been moved closer to the first end 33 of the first flexible panel element 30. Fig. 6 may show the point in time when the contact 36 between the first end 33 of the first flexible panel element 30 and the trailing edge movable 20, in particular the first adjustment element 26, is established, or a point in time immediately after the contact 36 between the first end 33 of the first flexible panel element 30 and the trailing edge movable 20, in particular the first adjustment element 26. The gap 21 is thus fully closed in this state.

As can be derived from Fig. 6, the first corner 26a or tip region 26a of the triangularly shaped first adjustment element 26 is arranged above the first end 33 of the first flexible panel element 30 when establishing the contact 36 between the first end 33 of the first flexible panel element 30 and the first adjustment element 26. In this manner, the first end 33 of the first flexible panel element 30 is guided by the adjustment element 26 to move into a direction along the lower surface 25 of the trailing edge movable 20 as shown in Figs. 7 and 8. In particular, after the contact 36 was established, the first end 33 of the first flexible panel element 30 will slide along the lower surface of the first adjustment element 26, will pass the second corner 26b, i.e., the transition point between the first adjustment element 26 and the lower surface 25 of the trailing edge movable 20, and will finally slide along the lower surface 25 of the trailing edge movable 20. In comparison to Fig. 6, Fig. 7 now shows a state where the first end 33 of the first flexible panel element 30 moves along the lower surface 25 of the trailing edge movable 20 while maintaining the contact 36 between the first end 33 of the first flexible panel element 30 and the lower surface 25 of the trailing edge movable 20. The gap 21 is thus fully closed in this state.

Fig. 8 shows the trailing edge system 10 of Fig. 4, with the first flexible panel element 30 further moving, e.g., sliding, along the lower surface 25 of the trailing edge movable 20. In comparison to Fig. 7, Fig. 8 now shows a state where the first end 33 of the first flexible panel element 30 is further moved along the lower surface 25 of the trailing edge movable 20 while maintaining the contact 36 between the first end 33 of the first flexible panel element 30 and the lower surface 25 of the trailing edge movable 20. The gap 21 is thus fully closed in this state. In the configuration of Fig. 8, the trailing edge movable 20 may be in same intermediate or clean configuration 51 as shown in Fig. 2.

To summarize, the first adjustment element 26, also referred to as panel catcher device 26, is located at the flap nose surface 24. In spanwise direction of the flap 20, the first adjustment element 26 may just have a few millimeters in width to limit the influence on gap flow. Several of these adjustment elements may be located along the spanwise direction of the flap 20, depending on a width and/or a flexible behavior of the first flexible panel element 30. The lower shape of the first adjustment element 26 or any further adjustment element is designed in a way that the first flexible panel element 30 gets in contact earlier (when retracting the flap) and at a sharper angle. This may support the downward deflection of the first flexible panel element 30 by the flap 20.

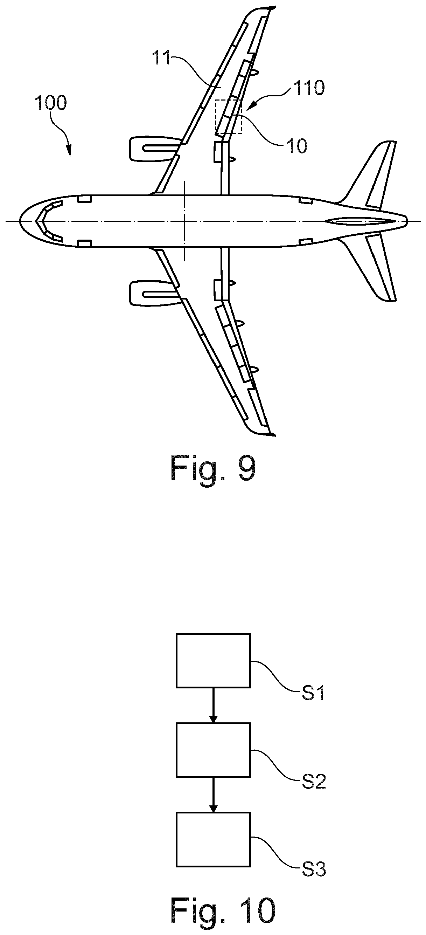

Fig. 9 shows an aircraft 100 comprising the trailing edge system 10 as explained above with respect to Figs. 1 to 8. The aircraft 100 comprises an aircraft wing 11, wherein the trailing edge system 10 is arranged at a trailing edge region 110 of the aircraft wing 11. In particular, the trailing edge system 10 may be part of or coupled to the aircraft wing 11.

Fig. 10 shows a flow diagram of a method for operating a trailing edge movable of a trailing edge system, in particular the trailing edge movable 20 of the trailing edge system 10 as described with respect to Figs. 1 to 8. The trailing edge system 10 comprises a wing structure 12 to which the trailing edge movable 20 is movably coupled, wherein the wing structure 12 has a flexible panel element 30 that is configured to at least partially seal a gap 21 between an outer surface 16 of the wing structure 12 and the trailing edge movable 20, and wherein the trailing edge movable 20 has a first adjustment element 26 being arranged on a surface of the trailing edge movable 20. In a step S1, the method for operating the trailing edge movable 20 of the trailing edge system 10 comprises moving the trailing edge movable 20 closer towards the flexible panel element 30. In another step S2, the method comprises establishing a contact 36 between the first adjustment element 26 and the flexible panel element 30. In another step S3, the method comprises adjusting, by the first adjustment element 26, a movement of the flexible panel element 30 such that a first end 33 of the flexible panel element 30 moves along a first, e.g., lower, surface region 25 of the trailing edge movable 20.

## Claims

1. A trailing edge system (10) for an aircraft (100), comprising:
a wing structure (12) having a skin section (14) with an aerodynamic outer surface (16);
a trailing edge movable (20) which is movably coupled to the wing structure (12) and which is movable relative to the wing structure (12) between a retracted position (50) and an extended position (60);
a flexible panel element (30) which is connected to the skin section (14) of the wing structure (12) and is configured to at least partially seal a gap (21) between the outer surface (16) of the wing structure (12) and the trailing edge movable (20);
a first adjustment element (26) which is arranged on the trailing edge movable (20);
wherein the first adjustment element (26) is arranged relative to the flexible panel element (30) such that a first end (33) of the flexible panel element (30) comes into contact with the first adjustment element (26) when the trailing edge movable (20) is moved towards the flexible panel element (30); and
wherein the first adjustment element (26) is configured to adjust a movement of the flexible panel element (30) such that the first end (33) of the flexible panel element (30) moves along a first surface region (25) of the trailing edge movable (20).

2. The trailing edge system (10) according to claim 1,
wherein the trailing edge movable (20) has a cross-sectional shape in the form of an airfoil that is defined by a surrounding airfoil surface contour.

3. The trailing edge system (10) according to claim 2,
wherein the first adjustment element (26) is connected to the surrounding airfoil surface contour of the trailing edge movable (20).

4. The trailing edge system (10) according to any one of the preceding claims,
wherein the first adjustment element (26) has a substantially triangular cross-sectional shape.

5. The trailing edge system (10) according to any one of the preceding claims,
wherein the first adjustment element (26) is arranged at a leading edge surface region (24) of the trailing edge movable (20).

6. The trailing edge system (10) according to any one of the preceding claims,
wherein the first adjustment element (26) comprises a sheet-like or plate-like structure that is attached to the outer surface of trailing edge movable (20) and protrudes away from the outer surface of trailing edge movable (20).

7. The trailing edge system (10) according to any one of the preceding claims,
wherein the first adjustment element (26) is arranged relative to the flexible panel element (30) such that the first end (33) of the flexible panel element (30) comes into contact with the first adjustment element (26) when the trailing edge movable (20) is moved from the extended position (60) to the retracted position (50).

8. The trailing edge system (10) according to any one of the preceding claims, comprising:
a second adjustment element which is arranged on the trailing edge movable (20);
wherein the second adjustment element is spaced apart from the first adjustment element (26) in a spanwise direction of the trailing edge movable (20).

9. An aircraft wing (11) comprising the trailing edge system (10) according to any one of the preceding claims;
wherein the trailing edge system (10) is arranged at a trailing edge region (110) of the aircraft wing (11).

10. Method for operating a trailing edge movable (20) of a trailing edge system (10), the trailing edge system (10) comprising a wing structure (12) to which the trailing edge movable (20) is movably coupled, wherein the wing structure (12) has a flexible panel element (30) that is configured to at least partially seal a gap (21) between an outer surface (16) of the wing structure (12) and the trailing edge movable (20), wherein the trailing edge movable (20) has a first adjustment element (26) being arranged on a surface of the trailing edge movable (20); wherein the method comprises the steps of:
moving the trailing edge movable (20) towards the flexible panel element (30, S1);
establishing a contact (36) between the first adjustment element (26) and the flexible panel element (30, S2); and
adjusting, by the first adjustment element (26), a movement of the flexible panel element (30) such that a first end (33) of the flexible panel element (30) moves along a first surface region (25) of the trailing edge movable (20, S3).
